# EUROPÄISCHE PATENTANMELDUNG

(11) **EP 1 865 392 A1**
(43) Veröffentlichungstag der Anmeldung: **12.12.2007**
(21) Anmeldenummer: 06011934.4
(22) Anmeldetag: 09.06.2006
(51) Int. Cl.: G05B 13/04

(54) **Verfahren und Vorrichtung zum Optimieren von Freiheitsgraden einer Gütefunktion**

(71) Anmelder: SIEMENS AKTIENGESELLSCHAFT, 80333 München (DE)
(72) Erfinder: von Hanwehr, Rainer Hannbeck, 93188 Pielenhofen (DE)

(57) **Zusammenfassung**

Verfahren zum Optimieren von Werten einer.auswählbaren Anzahl von Optimierungsfreiheitsgraden (X5, X6) einer Gütefunktion (GF), welche in Abhängigkeit von einer Anzahl von Randparametern (R1-RM) und einer Anzahl von Freiheitsgraden (X1-XN) einen Gütefunktionswert liefert, mit den Verfahrensschritten Festlegen (S1) einer Auswahl von zu optimierenden Optimierungsfreiheitsgraden (XP, XQ) aus der Anzahl von Freiheitsgraden (X1-XN), Festlegen (S2) von vorbestimmten Werten für die nicht zu optimierenden Freiheitsgrade, Zusammenstellen (S3) einer Datenstruktur (DS) mit allen Freiheitsgraden (X1-XN) und mit Anzeigedaten (AD), wobei allen Freiheitsgraden (X1-XN) Werte zugewiesen sind und die Anzeigedaten (AD) die Optimierungsfreiheitsgrade (XP, XQ) in der Datenstruktur (DS) markieren, Bestimmen (S4) eines Gütefunktionswertes mit der Gütefunktion (GF) in Abhängigkeit von den Randparametern (R1-RM) und den in der Datenstruktur (DS) vorliegenden Werten der Freiheitsgrade (X1-XN), und Überschreiben (S6) der durch die Anzeigedaten (AD) markierten Werte der Optimierungsfreiheitsgrade (XP, XQ) in der Datenstruktur (DS) mit geänderten Werten (XP', XQ') und Bestimmen von Gütefunktionswerten bis ein vorgegebener optimaler Gütefunktionswert erzielt wird zum Bestimmen von Optimierungswerten der Optimierungsfreiheitsgrade (XP, XQ).

## Beschreibung

Die vorliegende Erfindung betrifft ein Verfahren und eine Optimierungsvorrichtung zum Optimieren von Werten einer auswählbaren Anzahl von Optimierungsfreiheitsgraden einer Gütefunktion, welche in Abhängigkeit von einer Anzahl von Randparametern und einer Anzahl von Freiheitsgraden einen Gütefunktionswert liefert.

Bei Optimierungsaufgaben werden optimale Parameterwerte bzw. Werte von Freiheitsgraden eines komplexen Systems gesucht. Dabei besteht die Optimierung in der Regel darin, eine Ziel-oder Gütefunktion zu minimieren oder zu maximieren. Eine Optimierungsaufgabe kann beispielsweise darin bestehen, bei einem vorliegenden physikalischen Modell für die Bestimmung einer Messgröße, wobei das Modell eine größere Anzahl von anpassbaren Parametern oder Freiheitsgraden benötigt, die Werte dieser Freiheitsgrade derart zu bestimmen, dass ein entsprechendes Modellergebnis mit dem realen Messwert der entsprechenden Größe möglichst gut übereinstimmt:

Zur Suche der optimalen Werte für die Freiheitsgrade sind verschiedene mathematische Verfahren bekannt, die beispielsweise computerimplementiert als Optimierungsroutinen eingesetzt werden können.

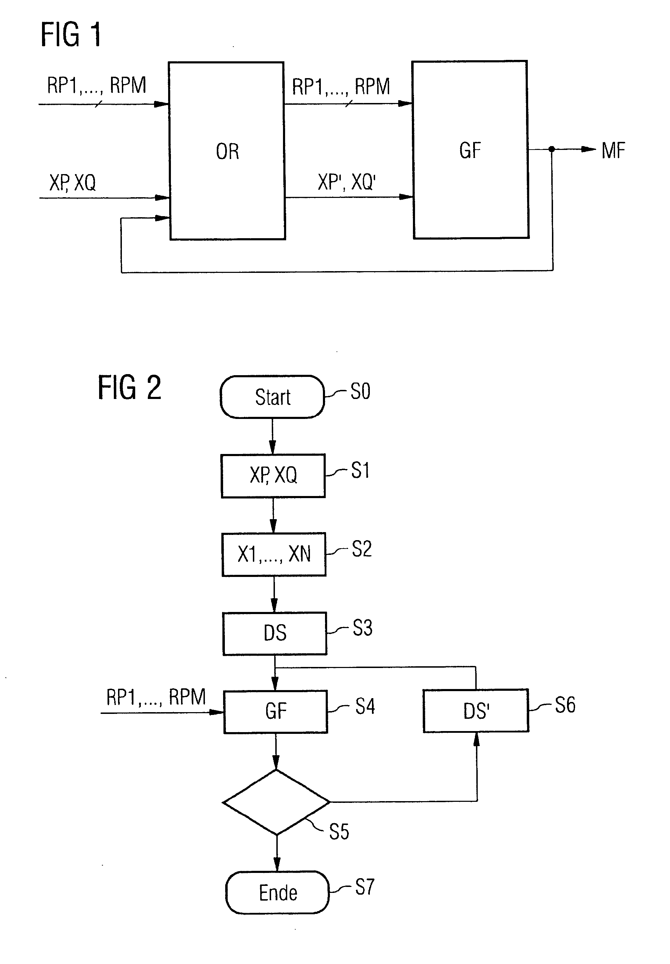

In der Figur 1 ist zur näheren Erläuterung der Problematik der Ablauf einer Optimierung als Zusammenspiel funktionaler Blöcke dargestellt. Es ist eine Gütefunktion GF = GF[RP1, ... RPM; XP, XQ] vorgegeben, welche als Eingangsgrößen eine Anzahl von festen Randparametern RP1-RPM und ferner Werte von Freiheitsgraden XP, XQ erhält. Die Randparameter weisen dabei prinzipielle Freiheitsgrade X1, ... XP-1, XP+1 ... XQ-1, XQ+1, ... XN der Gütefunktion GF auf, die nicht optimiert werden, und daher als feste Randparametern gelten. Die Gütefunktion GF liefert einen Gütefunktionswert, oder wie in dem vorgenannten Beispiel erwähnt, die Differenz zwischen einem Modellergebnis und dem tatsächlichen Messwert der modellierten Größe als Modellfehler MF. Aufgabe der Optimierung ist in dem Fall eine Anpassung der Werte der Freiheitsgrade XP, XQ derart, dass der Modellfehler MF möglichst gering wird.

Die Suche bzw. das Optimieren der Werte dieser besten Freiheitsgrade XP, XQ kann durch eine, z. B. als Optimierungsroutine computerimplementiert ausgeführte, Optimierungseinrichtung durchgeführt werden. Eine entsprechende Optimierungseinrichtung OR erhält als Eingangsvariablen die Randparameter, RP1-RPM sowie die auf ihren optimalen Wert zu bestimmenden Freiheitsgrade XP, XQ und den mittels der Gütefunktion GF berechneten Modellfehler MF. Programmiertechnisch lassen sich einer Optimierungsroutine OR beispielsweise die Gütefunktion GF, ein Vektor mit den Randparametern und die Freiheitsgrade übergeben: OR[GF, (RP1, ... RPM), XP, XQ]. Die Optimierung erfolgt nun, indem die Optimierungseinrichtung OR der Gütefunktion GF jeweils die festen Randparameter RP1-RPM übergibt, sowie veränderliche Werte für die Freiheitsgrade XP, XQ. Daraufhin wird der Modellfehler MF durch die Gütefunktion berechnet.

Die Optimierungseinrichtung OR wendet nun einschlägige Optimierungsverfahren an und ändert nach jedem Berechnungsschritt des Modellfehlers MF durch die Gütefunktion GF die Werte der Freiheitsgrade XP', XQ'. In einem einfachen Beispiel ist es beispielsweise möglich, alle möglichen Kombinationen der (physikalisch sinnvollen) Werte für die Freiheitsgrade XP, XQ durchzuprobieren und die günstigste Kombination als Optimierungswerte der Freiheitsgrade auszugeben.

Ein Problem bei der Durchführung dieses Optimierungsverfahrens, beispielsweise durch eine computerimplementierte Optimierungsroutine oder aber eine dezidierte-Optimierungseinrichtung besteht darin, dass vor der Zusammenstellung der die jeweilige Optimierungsaufgabe lösenden Einrichtungen oder Computerprogrammteile OR, GF entschieden werden muss, wie viele und welche Freiheitsgrade zu optimieren sind. Daher muss immer eine entsprechende Anpassung der Optimierungseinrichtung erfolgen.

Es ist z. B. denkbar, dass die Gütefunktion GF eine große Anzahl von Freiheitsgraden aufweist, von denen jedoch nur eine Untermenge zu optimieren ist, da für die übrigen, nicht zu optimierenden Freiheitsgrade bereits günstige Werte gefunden wurden, die erfahrungsgemäß nicht verändert werden sollen. Insbesondere bei sehr komplexen Gütefunktionen, die auf der Modellierung von komplexen messtechnischen Zusammenhängen basieren, ist dies der Fall. Insofern gelten die nicht zu optimierenden Freiheitsgrade der Gütefunktion als Randparameter und werden von der Optimierungseinrichtung und Einrichtung zur Berechnung der Gütefunktion so behandelt. Für die Ausführung der Optimierungsroutine bzw. Optimierungseinrichtung bedeutet dies, dass immer dann, wenn nur eine bestimmte Untermenge der Freiheitsgrade der Gütefunktion optimiert werden soll, in dem Beispiel der Figur 1 XP, XQ, dass die übrigen Freiheitsgrade X1, ...XP-1, XP+1, ...XQ-1, XQ+1, ... XN als Randparameter umdeklariert werden müssen und die Optimierungseinrichtung entsprechend angepasst werden muss. Schon für den Fall, dass die Gütefunktion nur zwei Freiheitsgrade aufweist GF(X1, X2), ergeben sich vier verschiedene Ausführungen der Optimierungseinrichtung:
a) keine Randparameter; X1, X1 sind zu optimieren,
b) X1, X2 sind Randparameter; keine zu optimierenden Freiheitsgrade,
c) X1 ist Randparameter; X2 ist zu optimieren, und
d) X2 ist Randparameter; X1 ist zu optimieren.

Der Entwurf und die Entwicklung derartiger Optimierungseinrichtungen sind aufwändig und zeitintensiv. Eine einfache und schnelle Anpassung eines derartigen Optimierungsverfahrens, wie es in der Figur 1 dargestellt ist, an eine variierende Anzahl von zu optimierenden Freiheitsgraden ist nicht möglich.

Es ist daher eine Aufgabe der vorliegenden Erfindung, ein Verfahren zum Optimieren zu schaffen, mittels dessen einfach und flexibel viele unterschiedliche Kombinationen von zu optimierenden Freiheitsgraden einer Gütefunktion zu bestimmen sind.

Diese Aufgabe wird durch ein Verfahren mit den Merkmalen des Patentanspruchs 1 und/oder durch eine Optimierungsvorrichtung mit den Merkmalen des Patentanspruchs 12 gelöst.

Demgemäß ist ein Verfahren zum Optimieren von Werten einer auswählbaren Anzahl von Optimierungsfreiheitsgraden einer Gütefunktion vorgesehen, wobei die Gütefunktion in Abhängigkeit von einer Anzahl von Randparametern und einer Anzahl von Freiheitsgraden einen Gütefunktionswert liefert. Dabei werden die folgenden Verfahrensschritte ausgeführt:
- Festlegen einer Auswahl von zu optimierenden Optimierungsfreiheitsgraden aus der Anzahl von Freiheitsgraden;
- Festlegen von vorbestimmten Werten für die nicht zu optimierenden Freiheitsgrade;
- Zusammenstellen einer Datenstruktur mit allen Freiheitsgraden und mit Anzeigedaten, wobei allen Freiheitsgraden Werte zugewiesen sind und die Anzeigedaten die Optimierungsfreiheitsgrade in der Datenstruktur markieren;
- Bestimmen eines Gütefunktionswertes mit der Gütefunktion in Abhängigkeit von den Randparametern und den in der Datenstruktur vorliegenden Werten der Freiheitsgrade; und
- Überschreiben der durch die Anzeigedaten markierten Werte der Optimierungsfreiheitsgrade in der Datenstruktur mit geänderten Werten und Bestimmen von Gütefunktionswerten bis ein vorgegebener optimaler Gütefunktionswert erzielt wird zum Bestimmen von Optimierungswerten der Optimierungsfreiheitsgrade.

Ferner schafft die Erfindung eine Optimierungsvorrichtung zur Optimierung von einer variablen Anzahl von Freiheitsgraden einer Gütefunktion, welche in Abhängigkeit von einer Anzahl von Randparametern und einer Anzahl von Freiheitsgraden einen Gütefunktionswert liefert. Die Optimierungsvorrichtung weist auf:
- eine Eingabeeinrichtung, welche die Randparameter, eine Auswahl von zu optimierenden Optimierungsfreiheitsgraden und Werte der nicht zu optimierenden Freiheitsgrade empfängt;
- eine erste Schnittstelleneinrichtung, welche eine Datenstruktur mit allen Freiheitsgraden und mit Anzeigedaten erzeugt, wobei allen Freiheitsgraden Werte zugewiesen sind und die Anzeigedaten die Optimierungsfreiheitsgrade in der Datenstruktur markieren;
- eine Berechnungseinrichtung, welche die Datenstruktur und die Randparameter entgegennimmt und einen mittels der Gütefunktion berechneten Gütefunktionswert ausgibt; und
- eine Optimierungseinrichtung, welche die Datenstruktur, die Auswahl der zu optimierenden Optimierungsfreiheitsgrade und den Gütefunktionswert empfängt, und geänderte Werte für die Optimierungsfreiheitsgrade in Abhängigkeit von mindestens einem Gütefunktionswert ausgibt;
- eine zweite Schnittstelleneinrichtung, welche die Datenstruktur und die geänderten Werte für die Optimierungsfreiheitsgrade empfängt, die Werte der durch die Anzeigedaten markierten Optimierungsfreiheitsgrade mit den geänderten Werte überschreibt, und welche die Datenstruktur mit den überschriebenen Optimierungsfreiheitsgraden an die Berechnungseinrichtung ausgibt.

Gemäß der Erfindung wird eine Datenstruktur erzeugt, welche alle Freiheitsgrade der Gütefunktion aufweist. Z. B. kann eine Sequenz von Datenfeldern vorgesehen sein, welche jeweils Werte der Freiheitsgrade aufweisen. Ferner ist die Datenstruktur mit Anzeigedaten versehen, die diejenigen Freiheitsgrade indiziert, welche zu optimieren sind. Beispielsweise können sich an die Datenfelder mit den Werten der Freiheitsgrade Felder mit Zeigern oder Pointern vorgesehen sein, die auf die zu optimierenden Optimierungsfreiheitsgrade zeigen.

Dies hat den Vorteil, dass zum Bestimmen des Gütefunktionswertes einer entsprechenden Gütefunktion diese Datenstruktur übergeben werden kann. Zur eigentlichen Optimierung werden dann nur diejenigen Datenfelder mit geänderten Werten für die Optimierungsfreiheitsgrade überschrieben, welche durch die Anzeigedaten markiert sind.

Bei einem Einsatz des erfindungsgemäßen Verfahrens in einer Vorrichtung zur Optimierung erhält die entsprechende Optimierungseinrichtung immer dieselbe Anzahl von als Randparameter aufzufassende Größen, die in der Datenstruktur abgelegt sind. Vorzugsweise werden der Datenstruktur auch die Werte der Randparameter zugefügt. Die Datenstruktur weist dann z. B. die Werte der Randparameter, der Freiheitsgrade und die Anzeigedaten auf. Die Datenstruktur kann dabei als Datenvektor aufgeführt sein.

Sind die Randparameter und die Freiheitsgrade der Datenstruktur zusammengefasst, enthält die Datenstruktur einen Vektor mit Werten der Randparameter und aller Freiheitsgrade. Die Berechnungseinrichtung ist dann derart eingerichtet, dass sie eine entsprechende Datenstruktur entgegennimmt und aus den in der Datenstruktur enthaltenen Werten den Gütefunktionswert berechnet. Es ist dabei keine weitere Schnittstelle notwendig, um eine vorbestimmte Anzahl von zu optimierenden Werten von Optimierungsfreiheitsgraden vorzuhalten.

Auch die Optimierungseinrichtung kann vereinfacht ausgeführt werden, da in der nachgekoppelten zweiten Schnittstelleneinrichtung bzw. im Verfahrensschritt e) die Datenstruktur bzw. die Werte der Optimierungsfreiheitsgrade verändert werden. Durch das Zusammenstellen der Datenstruktur und die Verwendung der Datenstruktur beim Optimieren der Optimierungsfreiheitsgrade muss keinerlei Anpassung der in der Optimierungsvorrichtung eingesetzten Einrichtungen erfolgen, wenn verschiedene Untermengen von Optimierungsfreiheitsgraden ausgewählt werden. Die Erfindung ermöglicht daher eine sehr flexible Optimierung bei einer dynamischen Anzahl und Kombination von zu optimierenden Freiheitsgraden.

Vorzugsweise sieht die Gütefunktion vor, eine von einer Modellfunktion, welche von den Freiheitsgraden abhängt, gelieferte Messgrößenabschätzung für eine Messgröße mit einem gemessenen Wert der Messgröße zu vergleichen und das Vergleichsergebnis als Gütefunktionswert auszugeben. Dabei liefert die Modellfunktion in Abhängigkeit von den Randparametern und den Freiheitsgraden die Abschätzung der Messgröße. Bevorzugt werden die Werte der Optimierungsfreiheitsgrade derart geändert, dass der Gütefunktionswert ein Minimum aufweist.

Vorzugsweise wird nach dem Überschreiben der durch die Anzeigedaten markierten Werte der Optimierungsfreiheitsgrade ein Verfahrensschritt vorgesehen, bei dem die Anzeigedaten aus der Datenstruktur entfernt werden. Dies kann vorteilhafterweise die zweite Schnittstelleneinrichtung durchführen. In diesem Fall wird der Gütefunktion beispielsweise ein Vektor nur mit den zur Berechnung des Gütefunktionswertes notwendigen Werten aller Freiheitsgrade und der Randparameter übergeben.

Vorzugsweise sind die Verfahrensschritte als Schnittstellenroutine, Berechnungsroutine und/oder Optimierungsroutine eines Computerprogramms implementiert. Ferner sind vorzugsweise die Eingabeeinrichtung, die erste Schnittstelleneinrichtung, die zweite Schnittstelleneinrichtung, die Berechnungseinrichtung und/oder die Optimierungseinrichtung als ausführbares Computerprogramm implementiert. Die Optimierungsvorrichtung führt bevorzugt ein erfindungsgemäßes Verfahren zum Optimieren durch. Die Erfindung schafft ferner ein Computerprogrammprodukt, welches die Durchführung eines erfindungsgemäßen Verfahrens zum Optimieren von Werten einer auswählbaren Anzahl von Optimierungsfreiheitsgraden einer Gütefunktion, welche in Abhängigkeit von einer Anzahl von Randparametern und einer Anzahl von Freiheitsgraden einen Gütefunktionswert liefert, veranlasst, wobei die Verfahrensschritte als Routinen implementiert sind.

Es ist ferner eine Motorsteuerung mit einer programmierbaren Steuervorrichtung vorgesehen, welche derart ausgelegt ist, dass ein erfindungsgemäßes Verfahren zur Optimierung der Freiheitsgrade einer Modellfunktion für eine Motormessgröße durchgeführt wird. Dabei erfolgt insbesondere eine Optimierung für Freiheitsgrade einer Modellfunktion zur Abschätzung einer Kühlmitteltemperatur.

Weitere vorteilhafte Ausgestaltungen der Erfindung sind Gegenstand der Unteransprüche sowie der im Folgenden unter Bezugnahme auf die Figuren näher erläuterten Ausführungsbeispiele. Es zeigt dabei:
- Figur 1:: eine schematische Darstellung einer Optimierungsaufgabe;
- Figur 2:: ein Ablaufdiagramm einer Ausführungsform des erfindungsgemäßen Verfahrens zum Optimieren;
- Figur 3:: eine Darstellung eines Ausführungsbeispiels der erfindungsgemäßen Datenstruktur;
- Figur 4:: eine schematische Darstellung einer Ausführungsform einer Gütefunktion;
- Figur 5:: eine schematische Darstellung einer Ausführungsform der erfindungsgemäßen Optimierungsvorrichtung; und
- Figur 6:: eine weitere Ausführungsform der erfindungsgemäßen Datenstruktur.

In den Figuren sind, sofern nichts Anderes angegeben ist, gleiche bzw. funktionsgleiche Elemente mit denselben Bezugszeichen versehen worden.

In der Figur 2 ist ein Ablaufdiagramm einer Ausführungsform des erfindungsgemäßen Optimierungsverfahrens dargestellt. Es ist dabei eine Gütefunktion GF(RP1, ... RPM; X1, ... XN) vorgegeben, die in Abhängigkeit von einer Anzahl von Randparametern RP1, ... RPM und einer Anzahl von Freiheitsgraden X1, ... XN einen Gütefunktionswert liefert. Durch das Optimierungsverfahren sollen Werte von ausgewählten Optimierungsfreiheitsgraden XP, XQ in Abhängigkeit von einem jeweiligen Gütefunktionswert und einem Satz von Randparametern RP1, ..., RPM, die nicht variiert oder optimiert werden, bestimmt werden. Es wird somit aus der Gesamtmenge von Freiheitsgraden der Gütefunktion GF eine Untermenge ausgewählt, die verändert werden und deren optimierte Werte von dem Optimierungsverfahren ausgegeben werden.

Im Schritt S0 wird das Optimierungsverfahren gestartet. Im Schritt S1 wird aus allen Freiheitsgraden X1-XN eine Auswahl für diejenigen Freiheitsgrade XP, XQ getroffen, welche optimiert werden sollen. Diese werden im Folgenden als Optimierungsfreiheitsgrade bezeichnet.

Im Schritt S2 werden vorbestimmte Werte für die nicht zu optimierenden Freiheitsgrade X1, ... XP-1, XP+1, ... XQ-1, XQ+1, ... XN festgelegt. Es ist beispielsweise denkbar, dass in vorangegangenen Optimierungen für diese nicht zu optimierenden Freiheitsgrade bereits Werte ermittelt wurden, die sich als besonders günstig gezeigt haben. Diese vorbestimmten Werte werden hier diesen nicht zu optimierenden Freiheitsgraden zugewiesen.

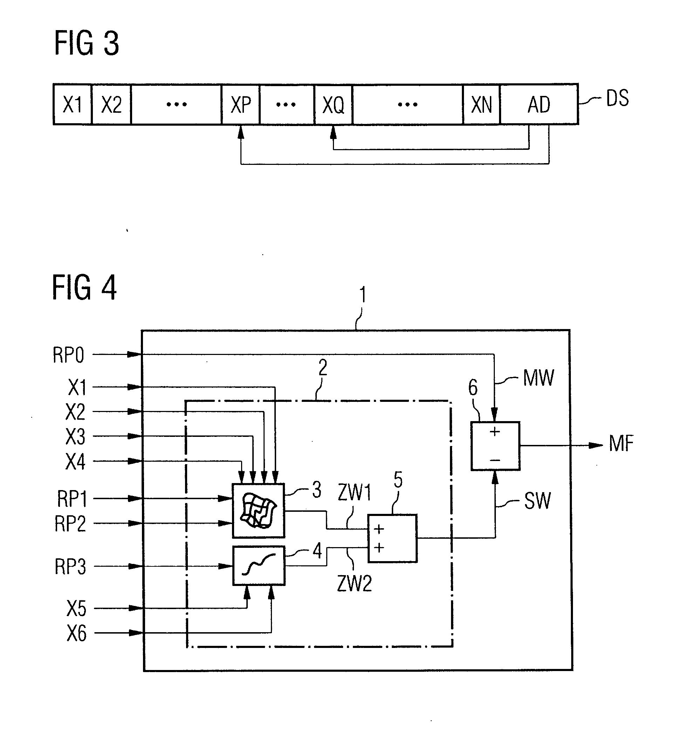

Im Schritt S3 wird eine Datenstruktur DS erzeugt, die alle Freiheitsgrade X1-XN aufweist und ferner Anzeigedaten AD enthält, die die Optimierungsfreiheitsgrade XP, XQ in der Datenstruktur markieren. In der Figur 3 ist beispielhaft eine Datenstruktur dargestellt. Die Datenstruktur weist beispielsweise N Felder X1-XN für die Werte der Freiheitsgrade auf und ferner ein Datenfeld für die Anzeigedaten AD, die auf geeignete Weise auf die zu optimierenden Optimierungsfreiheitsgrade XP und XQ zeigen. Dabei sind verschiedene Möglichkeiten denkbar. Beispielsweise können die Anzeigedaten AD in binär codierter Form die Indizes P und Q darstellen, sodass das XP-und das Q-Datenfeld als Datenfelder erkannt werden können, die Werte von zu optimierenden Freiheitsgraden aufweisen.

Anschließend wird im Schritt S4 der Gütefunktionswert mittels der Gütefunktion GF in Abhängigkeit von den Randparametern RP1, ..., RPM und den in der Datenstruktur vorliegenden Werten aller Freiheitsgrade X1-XN bestimmt. Die in den Schritten S4, S5, S6 dargestellte Schleife entspricht der eigentlichen Optimierung auf die optimalen Werte für die Optimierungsfreiheitsgrade XP, XQ.

Im Schritt S5 wird der bestimmte bzw. berechnete Gütefunktionswert mit einem vorgegebenen Schwellwert verglichen, der beispielsweise bei einer Minimierungsaufgabe der Gütefunktion angibt, ob der durch die aktuellen Werte der Optimierungsfreiheitsgrade hervorgerufene Gütefunktionswert ausreichend exakt ist oder nahe einem Zielgütefunktionswert liegt. Falls dies der Fall ist, wird im Schritt S7 die Optimierung beendet.

In der Regel sind jedoch mehrere Durchläufe der Schleife S4, S5, S6 notwendig. Falls im Schritt S5 keine genügend gute Annäherung an ein gewünschtes Optimum des Gütefunktionswertes erreicht wird, werden im Schritt S6 die durch die Anzeigedaten AD in der Datenstruktur DS markierten Werte der Optimierungsfreiheitsgrade XP, XQ durch Überschreiben verändert. Es ergibt sich eine entsprechend geänderte Datenstruktur DS'. Diese wird wiederum zur Berechnung eines neuen Gütefunktionswertes im Schritt S4 verwendet.

Bei den Randparametern RP1-RPM kann es sich auch um veränderliche Parameter handeln, die jedoch nicht im Verlauf der Optimierungsschritte S5, S6 verändert werden. Beispielsweise kann bei der Optimierung von Freiheitsgraden für eine Modellfunktion zur Abschätzung einer Messgröße der tatsächliche Wert der Messgröße, welcher über einen Messfühler erfasst wird, als Randparameter aufgefasst werden. Optional können auch die Randparameter in die Datenstruktur DS eingefügt werden.

Die Figur 4 zeigt schematisch eine Berechnungseinrichtung 1 zum Bestimmen von Gütefunktionswerten. Die von der Berechnungseinrichtung zu bestimmenden Gütefunktionen GF[RP0, ... RP3; X1 ... X6] gibt beispielsweise einen Modellfehler MF aus, der sich aus einem Vergleich zwischen einer tatsächlichen Messgröße, wie z. B. einer Kühlmitteltemperatur, mit einer von einer Modellfunktion KM = KM(RP1, RP2, RP3; X1, ... X6) abgeschätzten Wert SW ergibt.

In der Figur 4 ist eine interne Berechnungseinrichtung 2 vorgesehen, die in Abhängigkeit von sechs Freiheitsgraden X1-X6 und drei Randparametern RP1, RP2, RP3 einen Schätzwert SW beispielsweise für eine Kühlmitteltemperatur in einem Fahrzeug ausgibt und eine entsprechende Modellfunktion KM realisiert. Der Berechnungseinrichtung 1 sind vier Randparameter RP0-RP3 und sechs Freiheitsgrade X1-X6 zugeführt. Der Randparameter RP0 stellt z. B. eine gemessene Kühlmitteltemperatur dar. RP1 entspricht einer Umgebungstemperatur, RP2 einer Motordrehzahl und RP3 einem Drehmoment des Motors. Diese Randparameter können beispielsweise durch Mess-Sonden im Fahrzeug einer Motorsteuerung übermittelt werden.

Das zugrunde liegende Modell KM für die Bestimmung der Kühlmitteltemperatur basiert hier beispielhaft dargestellt auf zwei Nachschlagetabellen 3, 4, deren jeweilige Tabelleninhalte durch die Werte der Freiheitsgrade X1-X4 und X5 und X6 festgelegt werden. Die Nachschlagetabelle 3 liefert beispielsweise in Abhängigkeit der Umgebungstemperatur RP1 und der Motordrehzahl RP2 einen ersten Zwischenwert ZW1. Die Nachschlagetabelle 3 stellt beispielsweise ein zweidimensionales Feld dar, wobei die den jeweiligen Koordinaten RP1, RP2 zugeordneten Werte durch die Werte der Freiheitsgrade X1-X4 zugewiesen werden. Die zweite Nachschlagetabelle 4 liefert in Abhängigkeit von dem Drehmoment RP3 einen zweiten Zwischenwert ZW2. Die Abbildung von Drehmoment RP3 auf Zwischenwert ZW2 ist hierbei durch die Freiheitsgrade X5 und X6 in der Nachschlagetabelle 4 festgelegt.

Die beiden Zwischenwerte ZW1 und ZW2 sind einer Addiereinrichtung 5 zugeführt, welche einen Schätzwert SW für die Kühlmitteltemperatur ausgibt. In einer Vergleichseinrichtung 6 wird der Schätzwert SW bzw. die von der zugrunde liegenden Modellfunktion KM gelieferte Messgrößenabschätzung SW für die Kühlmitteltemperatur mit dem gemessenen Wert der Kühlmitteltemperatur MW verglichen. Das Vergleichsergebnis wird als Modellfehler MF ausgegeben.

Die zur Optimierung vorgesehene Gütefunktion, welche durch die Berechnungseinrichtung 1 bestimmt wird, soll in dem hier betrachteten Fall vorzugsweise minimiert werden. Als alle die Gütefunktion beeinflussenden Parameter kommen die vier Randparameter RP0, ... RP3 und die sechs Freiheitsgrade X1-X6 in Frage. Es ist jedoch in diesem Beispiel gewünscht, nur die beiden Freiheitsgrade X5, X6 zu optimieren, welche die in der zweiten Nachschlagetabelle 4 abgelegte Abbildung von Drehmoment RP3 auf den zweiten Zwischenwert ZW2 definieren. Eine herkömmliche Optimierungseinrichtung, die Untergruppen der Freiheitsgrade X1-X6 optimieren sollte, müsste jeweils neu entworfen werden.

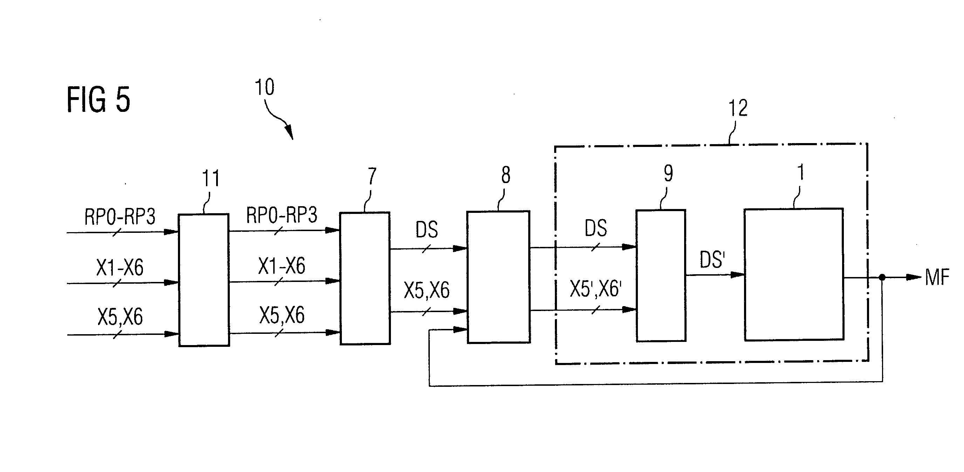

Die Figur 5 zeigt schematisch eine Optimierungsvorrichtung 10, die ein in der Figur 2 beschriebenes Optimierungsverfahren durchführt. Die Optimierungsvorrichtung 10 weist die Berechnungseinheit 1 zur Bestimmung von Gütefunktionswerten, eine Eingabeeinrichtung 11, eine erste Schnittstelleneinrichtung 7, eine Optimierungseinrichtung 8 und eine zweite Schnittstelleneinrichtung 9 auf.

Der Optimierungsvorrichtung 10 werden die Randparameter RP0-RP3, also die beispielsweise von einem Temperatursensor gemessene tatsächliche Kühlmitteltemperatur, die Umgebungstemperatur, die Drehzahl und das Drehmoment des Motors übergeben. Der Optimierungsvorrichtung 10 werden alle Freiheitsgrade X1-X6 übergeben und angezeigt, dass ausgewählte Optimierungsfreiheitsgrade, hier beispielsweise X5 und X6, hinsichtlich ihrer Werte zu optimieren sind.

Diese Eingaben werden der Eingabevorrichtung 11 übergeben und an die Schnittstelleneinrichtung 7 weitergeleitet. Die Schnittstelleneinrichtung 7 erzeugt aus den ihr übergegebenen Informationen eine Datenstruktur DS, die den gemessenen Kühlmitteltemperaturwert RP0, den Umgebungstemperaturwert RP1, den Drehzahlwert RP2, den Drehmomentwert RP3 und Werte für alle Freiheitsgrade X1-X6 umfasst.

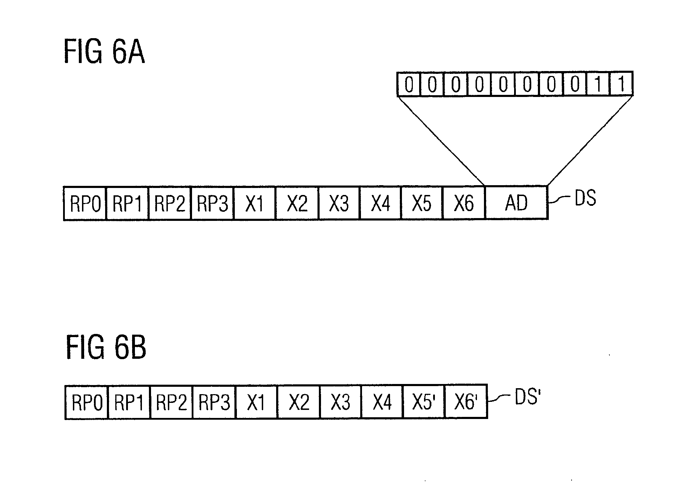

Die Figur 6A zeigt eine beispielhafte Datenstruktur DS. Die Datenstruktur DS ist als ein Vektor ausgeführt, der Datenfelder mit den Werten der Randparameter RP0-RP3, also der gemessenen Kühlmitteltemperatur, Umgebungstemperatur, Drehzahl und Drehmoment, die Werte der festgelegten Freiheitsgrade X1, X2, X3, X4 und prinzipiell beliebige Werte für die zu optimierenden Optimierungsfreiheitsgrade X5 und X6 aufweist.

Es ist ferner eine Bitfolge als Anzeigedaten AD vorgesehen, wobei die Anzeigedaten AD beispielsweise eine Anzahl von Bits aufweist, die der Anzahl der Randparameter plus der Anzahl aller Freiheitsgrade entspricht. Durch ein gesetztes Bit wird ein jeweiliges Datenfeld als ein Datenfeld indiziert oder markiert, welches einen zu optimierenden Optimierungsfreiheitsgrad aufweist. Die Anzeigedaten weisen beispielsweise zehn Bit auf, wobei die ersten vier Bits den Randparametern RP0-RP3 zugeordnet sind, die zweiten vier Bits den nicht zu optimierenden Freiheitsgraden X1-X4 zugeordnet sind und das neunte und zehnte Bit, welches jeweils gesetzt ist, markiert die Freiheitsgrade X5 und X6 als Optimierungsfreiheitsgrade.

Diese Datenstruktur DS wird von der Schnittstelleneinrichtung 7 erzeugt und an die Optimierungseinrichtung 8 übergeben. Die Schnittstelleneinrichtung 7 übermittelt der Optimierungseinrichtung 8 ferner als Eingangsvariablen die Namen X5 und X6 der zu optimierenden Optimierungsfreiheitsgrade. Die Optimierungseinrichtung 8 ist derart eingerichtet, dass die in der Datenstruktur DS übermittelten Daten als nicht zu optimierende, also feste Werte verwendet werden. Für die Optimierungseinrichtung 8 gilt die Datenstruktur DS praktisch als Randparameter für die weitere Optimierung.

Die Optimierungseinrichtung 8 liefert demnach lediglich geänderte Werte für die Optimierungsparameter X5 und X6, welche mit X5' und X6' bezeichnet sind. Dies erfolgt in Abhängigkeit von durch die Berechnungseinrichtung 1 bestimmten Gütefunktionswerten bzw. Modellfehlern MF, welche der Optimierungseinrichtung 8 ebenfalls zugeführt sind. Die Optimierungseinrichtung 8 gibt daher die Datenstruktur DS unverändert aus und erzeugt geänderte Werte für die Optimierungsfreiheitsgrade X5', X6`.

Insbesondere die Optimierungseinrichtung 8 kann vorteilhafterweise als eine Optimierungsroutine für ein Computerprogramm implementiert werden. Durch die vorgekoppelte Schnittstelleneinrichtung 7 wird für alle möglichen Kombinationen von zu optimierenden Freiheitsgraden nur eine einzige Optimierungseinrichtung 8 notwendig, da die Optimierungseinrichtung 8 die Datenstruktur DS als Randparameter durchschleust und eine Anzahl von zu ändernden Parametern bzw. den zu optimierenden Optimierungsfreiheitsgraden ausgangsseitig bereitstellt.

Der Optimierungseinrichtung 8 ist eine zweite Schnittstelleneinrichtung 9 nachgekoppelt, welche die Datenstruktur DS von der Optimierungseinrichtung 8 empfängt und die von der Optimierungseinrichtung 8 bestimmten bzw. geänderten Werte für die Optimierungsfreiheitsgrade X5', X6' ebenfalls entgegennimmt. Die zweite Schnittstelleneinrichtung 9 überschreibt nun in der Datenstruktur DS die durch die Anzeigedaten AD markierten Datenfelder, also die Datenfelder, welche den Optimierungsfreiheitsgraden X5, X6 zugeordnet sind, mit den von der Optimierungseinrichtung 8 gelieferten geänderten Werten X5', X6'. In der Figur 6B ist eine entsprechend veränderte Datenstruktur DS' dargestellt. Die zweite Schnittstelleneinrichtung 9 entfernt ferner die Anzeigedaten AD von der Datenstruktur DS. Die zweite Schnittstelleneinrichtung 9 liefert somit eine veränderte entsprechende Datenstruktur DS', die eine Kette von Datenfeldern aufweist, deren Anzahl der Summe aus der Anzahl der Randparameter RP0-RP3 mit der Anzahl aller Freiheitsgrade X1-X6 entspricht. Dabei sind die in den durch die ursprünglichen Anzeigedaten AD markierten Feldern abgelegte entsprechende Werte durch die optimierten bzw. geänderten Werte für die Optimierungsfreiheitsgrade überschrieben worden. Die geänderte Datenstruktur DS' weist nunmehr lediglich Werte auf, welche von der Berechnungseinrichtung 1 zur Bestimmung des entsprechenden Gütefunktionswertes verarbeitet werden können.

Die Berechnungseinrichtung 1 ist an die zweite Schnittstelleneinrichtung 9 gekoppelt und empfängt in Form der geänderten Datenstruktur DS' die Randparameter RP0-RP3 und Werte für alle Freiheitsgrade X1-X6. Optional lassen sich auch die zweite Schnittstelleneinrichtung 9 und die Berechnungseinrichtung 1 für die Bestimmung der Gütefunktionswerte 1 zu einer einzigen Berechnungseinrichtung 12 zusammenfassen.

Die in der Figur 5 dargestellte Optimierungsvorrichtung 10 wird beispielsweise als programmierbare Steuereinrichtung einer Motorsteuerung eingesetzt, welche die Freiheitsgrade X5, X6 optimiert und dadurch eine Modellfunktion bzw. eine zu deren Berechnung ausgestaltete Berechnungseinrichtung 2 zur Abschützung der Kühlmitteltemperatur optimiert.

Bei der Ausführungsform der Optimierungsvorrichtung 10 können einfach und flexibel beliebige Kombinationen von zu optimierenden Freiheitsgraden ausgewählt werden und durch entsprechende Anzeigedaten AD in der Datenstruktur DS markiert werden. Für die Optimierungseinrichtung 8, welche beispielsweise als computerimplementierte Routine vorliegt, spielt es keine Rolle, welche der Freiheitsgrade als Optimierungsfreiheitsgrade ausgewählt sind, da die Datenstruktur DS im Rahmen der Durchführung eines Optimierungsverfahrens innerhalb der durch die Optimierungseinrichtung 8, die Schnittstelleneinrichtung 9 und die Berechnungseinrichtung 1 realisierte Regelschleife als feste Randparameter gelten. Lediglich die Schnittstelleneinrichtung 9 überschreibt die entsprechenden Datenfelder für die Optimierungsfreiheitsgrade, in dem hier betrachteten Beispiel X5 und X6, mit entsprechenden Optimierungswerten.

Eine neue Konfigurierung der Optimierungsroutine oder der Optimierungsvorrichtung ist bei einer Änderung der Anzahl der Optimierungsfreiheitsgrade nicht länger notwendig. Die Auswahl der zu optimierenden Freiheitsgrade erfolgt einfach durch geeignete Anzeigedaten AD in der Datenstruktur DS. Für die Berechnung der jeweiligen Gütefunktion kann ebenso eine einfache standardisierte Übergabemöglichkeit (beispielsweise mittels einer programmierbaren Schnittstelle) für die Datenstruktur DS geschaffen werden. Die Durchführung von Optimierungsverfahren, bei denen die Anzahl von Optimierungsfreiheitsgraden häufig frei gewählt werden muss, ist mittels der Erfindung daher einfach und flexibel möglich.

Obwohl die vorliegende Erfindung anhand von bevorzugten Ausführungsbeispielen näher erläutert wurde, ist sie nicht darauf beschränkt, sondern vielfältig modifizierbar. Die dargestellten Möglichkeiten der Formate für die Datenstruktur DS sind nicht abschließend zu verstehen. So sind neben der dargestellten Indizierung durch eine Bitfolge oder geeignete Zeigerfelder weitere, dem Fachmann geläufige Markierungsmöglichkeiten in Datenstrukturen einsetzbar.

Die Erfindung lässt sich auf vielfältige Optimierungsalgorithmen anwenden und kann eine Vielzahl von Optimierungsaufgaben neben dem hier genannten Beispiel zur Verbesserung einer Modellfunktion zur Bestimmung einer Kühlmitteltemperatur erfüllen.

## Patentansprüche

1. Verfahren zum Optimieren von Werten einer auswählbaren Anzahl von Optimierungsfreiheitsgraden (X5, X6) einer Gütefunktion (GF), welche in Abhängigkeit von einer Anzahl von Randparametern (R1-RM) und einer Anzahl von Freiheitsgraden (X1-XN) einen Gütefunktionswert liefert, mit den Verfahrensschritten:
a) Festlegen (S1) einer Auswahl von zu optimierenden Optimierungsfreiheitsgraden (XP, XQ) aus der Anzahl von Freiheitsgraden (X1-XN);
b) Festlegen (S2) von vorbestimmten Werten für die nicht zu optimierenden Freiheitsgrade;
c) Zusammenstellen (S3) einer Datenstruktur (DS) mit allen Freiheitsgraden (X1-XN) und mit Anzeigedaten (AD), wobei allen Freiheitsgraden (X1-XN) Werte zugewiesen sind und die Anzeigedaten (AD) die Optimierungsfreiheitsgrade (XP, XQ) in der Datenstruktur (DS) markieren;
d) Bestimmen (S4) eines Gütefunktionswertes mit der Gütefunktion (GF) in Abhängigkeit von den Randparametern (R1-RM) und den in der Datenstruktur (DS) vorliegenden Werten der Freiheitsgrade (X1-XN) ; und
e) Überschreiben (S6) der durch die Anzeigedaten (AD) markierten Werte der Optimierungsfreiheitsgrade (XP, XQ) in der Datenstruktur (DS) mit geänderten Werten (XP', XQ') und Bestimmen von Gütefunktionswerten bis ein vorgegebener Gütefunktionswert erzielt wird, wobei Optimierungswerte der Optimierungsfreiheitsgrade (XP, XQ) bestimmt werden.

2. Verfahren nach Anspruch 1,
**dadurch gekennzeichnet,**
**dass** ein Verfahrensschritt vorgesehen ist: Bestimmen der geänderten Werte für die Optimierungsfreiheitsgrade in Abhängigkeit von mindestens einem Gütefunktionswert.

3. Verfahren nach Anspruch 1 oder 2,
**dadurch gekennzeichnet,**
**dass** die Datenstruktur (DS) die Werte der Randparameter (R1-RM), der Freiheitsgrade (X1-XN) und die Anzeigedaten (AD), insbesondere als ein Datenvektor, aufweist.

4. Verfahren nach wenigstens einem der Ansprüche 1 - 3,
**dadurch gekennzeichnet,**
**dass** eine Messgrößenabschätzung (SW) für eine Messgröße die von einer Modellfunktion, welche von den Freiheitsgraden abhängt, geliefert wird, mit einem gemessenen Wert (MW) der Messgröße verglichen wird, und das Vergleichsergebnis (MF) als Gütefunktionswert ausgegeben wird, wobei die Modellfunktion in Abhängigkeit von den Randparametern (R1-RM) und den Freiheitsgraden (X1-XN) die Abschätzung (SW) der Messgröße liefert.

5. Verfahren nach wenigstens einem der Ansprüche 1 - 4,
**dadurch gekennzeichnet,**
**dass** die Werte der Optimierungsfreiheitsgrade (XP, XQ) derart geändert werden, dass der Gütefunktionswert ein Minimum aufweist.

6. Verfahren nach wenigstens einem der Ansprüche 1 - 5,
**dadurch gekennzeichnet,**
**dass** nach dem Überschreiben (S6) der durch die Anzeigedaten (AD) markierten Werte der Optimierungsfreiheitsgrade (XP, XQ) ein Verfahrensschritt vorgesehen ist: Entfernen der Anzeigedaten (AD) aus der Datenstruktur.

7. Verfahren nach wenigstens einem der Ansprüche 1 - 6,
**dadurch gekennzeichnet,**
**dass** der Schritt Zusammenstellen (S3) der Datenstruktur als erste Schnittstellenroutine eines Computerprogramms implementiert ist, welche als Eingangsvariablen alle Freiheitsgrade (X1-XN) und die Auswahl der zu optimierenden Optimierungsfreiheitsgrade (XP, XQ) empfängt, und welche die Datenstruktur (DS) und die Auswahl der zu optimierenden Optimierungsfreiheitsgrade (XP, XQ) ausgibt.

8. Verfahren nach wenigstens einem der Ansprüche 1 - 7,
**dadurch gekennzeichnet,**
**dass** die Gütefunktion (GF) als Berechnungsroutine eines Computerprogramms implementiert ist, welche als Eingangsvariable die Datenstruktur (DS) empfängt und welche den entsprechenden Gütefunktionswert ausgibt.

9. Verfahren nach wenigstens einem der Ansprüche 2 - 8,
**dadurch gekennzeichnet**,
das der Schritt Bestimmen der geänderten Werte für die Optimierungsfreiheitsgrade (XP, XQ) als eine Optimierungsroutine eines Computerprogramms implementiert ist, welche als Eingangsvariablen die Datenstruktur (DS), die Auswahl der zu optimierenden Optimierungsfreiheitsgrade (XP, XQ) und den Gütefunktionswert empfängt, und welche die Datenstruktur (DS) unverändert ausgibt und die geänderten Werte für die Optimierungsfreiheitsgrade (XP, XQ) ausgibt.

10. Verfahren nach wenigstens einem der Ansprüche 1 - 9,
**dadurch gekennzeichnet,**
**dass** der Schritt Überschreiben (S6) der durch die Anzeigedaten (AD) markierten Werte der Optimierungsfreiheitsgrade (XP, XQ) in der Datenstruktur (DS) mit geänderten Werten als zweite Schnittstellenroutine eines Computerprogramms implementiert ist, welche als Eingangsvariablen die Datenstruktur (DS) und die geänderten Werte für die Optimierungsfreiheitsgrade (XP, XQ) empfängt, und welche die entsprechende Datenstruktur (DS') mit den überschriebenen Werten der Optimierungsfreiheitsgrade (XP', XQ') ausgibt.

11. Computerprogrammprodukt, welches die Durchführung eines Verfahrens nach wenigstens einem der Ansprüche 1 - 10 veranlasst, wobei die Verfahrensschritte als Routinen implementiert sind.

12. Optimierungsvorrichtung (10) zur Optimierung von einer variablen Anzahl von Freiheitsgraden (X5, X6) einer Gütefunktion (GF), welche in Abhängigkeit von einer Anzahl von Randparametern (RPO-RP3) und einer Anzahl von Freiheitsgraden (X1-X6) einen Gütefunktionswert liefert, mit:
a) einer Eingabeeinrichtung (11), welche die Randparameter (RPO-RP3), eine Auswahl von zu optimierenden Optimierungsfreiheitsgraden (X5, X6) und Werte der nicht zu optimierenden Freiheitsgrade (X1-X4) empfängt;
b) einer ersten Schnittstelleneinrichtung (7), welche eine Datenstruktur (DS) mit allen Freiheitsgraden (X1-X6) und mit Anzeigedaten (AD) erzeugt, wobei allen Freiheitsgraden (X1-X6) Werte zugewiesen sind und die Anzeigedaten (AD) die Optimierungsfreiheitsgrade (X5, X6) in der Datenstruktur (DS) markieren;
c) einer Berechnungseinrichtung (1), welche die Datenstruktur (DS) und die Randparameter (RPO-RP3) entgegennimmt und einen mittels der Gütefunktion (GF) berechneten Gütefunktionswert ausgibt;
d) einer Optimierungseinrichtung (8), welche die Datenstruktur (DS), die Auswahl der zu optimierenden Optimierungsfreiheitsgrade (X5, X6) und den Gütefunktionswert empfängt, und geänderte Werte (X5', X-6') für die Optimierungsfreiheitsgrade (X5, X6) in Abhängigkeit von mindestens einem Gütefunktionswert ausgibt;
e) mit einer zweiten Schnittstelleneinrichtung (9), welche die Datenstruktur (DS) und die geänderten Werte (X5', X6') für die Optimierungsfreiheitsgrade (X5, X6) empfängt, die Werte der durch die Anzeigedaten (AD) markierten Optimierungsfreiheitsgrade (X5, X6) mit den geänderten Werten überschreibt, und welche die Datenstruktur (DS') mit den überschriebenen Optimierungsfreiheitsgraden (X5, X6) an die Berechnungseinrichtung (1) ausgibt.

13. Optimierungsvorrichtung (10) nach Anspruch 12,
**dadurch gekennzeichnet,**
**dass** die zweite Schnittstelleneinrichtung (9) die Anzeigedaten (AD) aus der Datenstruktur (DS) entfernt.

14. Optimierungsvorrichtung (10) nach Anspruch 12 oder 13,
**dadurch gekennzeichnet,**
**dass** die Eingabeeinrichtung (11), die erste Schnittstelleneinrichtung (7), die zweite Schnittstelleneinrichtung (9), die Berechnungseinrichtung (1) und/oder die Optimierungseinrichtung (8) als ausführbares Computerprogramm implementiert sind.

15. Optimierungsvorrichtung (10) nach wenigstens einem der Ansprüche 12 - 14,
**dadurch gekennzeichnet,**
**dass** die Optimierungseinrichtung (8) die Datenstruktur (DS) empfängt und unverändert ausgibt.

16. Optimierungsvorrichtung (10) nach wenigstens einem der Ansprüche 12 - 15,
**dadurch gekennzeichnet,**
**dass** die Datenstruktur (DS) ferner die Randparameter (RPO-RP3) umfasst.

17. Optimierungsvorrichtung (10) nach wenigstens einem der Ansprüche 12 - 16,
**dadurch gekennzeichnet,**
**dass** die Optimierungsvorrichtung (8) ein Verfahren nach wenigstens einem der Ansprüche 1 - 11 durchführt.

18. Motorsteuerung mit einer programmierbaren Steuereinrichtung, welche derart ausgelegt ist, dass ein Verfahren nach einem der Ansprüche 1 - 10 zur Optimierung der Freiheitsgrade einer Modellfunktion für eine Motormessgröße durchgeführt wird, wobei insbesondere eine Optimierung für Freiheitsgrade einer Modellfunktion zur Abschätzung einer Kühlmitteltemperatur erfolgt.

## Geänderte Patentansprüche

### Geänderte Patentansprüche gemäss Regel 86(2) EPÜ.

**1.** Optimierungsvorrichtung (10) zur Optimierung von einer variablen Anzahl von Freiheitsgraden (X5, X6) einer Gütefunktion (GF), welche in Abhängigkeit von einer Anzahl von Randparametern (RPO-RP3) und einer Anzahl von Freiheitsgraden (X1-X6) einen Gütefunktionswert liefert, mit:
a) einer Eingabeeinrichtung (11), welche die Randparameter (RP0-RP3), eine Auswahl von zu optimierenden Optimierungsfreiheitsgraden (X5, X6) und Werte der nicht zu optimierenden Freiheitsgrade (X1-X4) empfängt;
b) einer ersten Schnittstelleneinrichtung (7), welche eine Datenstruktur (DS) mit allen Freiheitsgraden (X1-X6) und mit Anzeigedaten (AD) erzeugt, wobei allen Freiheitsgraden (X1-X6) Werte zugewiesen sind und die Anzeigedaten (AD) die Optimierungsfreiheitsgrade (X5, X6) in der Datenstruktur (DS) markieren;
c) einer Berechnungseinrichtung (1), welche die Datenstruktur (DS) und die Randparameter (RP0-RP3) entgegennimmt und einen mittels der Gütefunktion (GF) berechneten Gütefunktionswert ausgibt;
d) einer Optimierungseinrichtung (8), welche die Datenstruktur (DS), die Auswahl der zu optimierenden Optimierungsfreiheitsgrade (X5, X6) und den Gütefunktionswert empfängt, und geänderte Werte (X5', X6') für die Optimierungsfreiheitsgrade (X5, X6) in Abhängigkeit von mindestens einem Gütefunktionswert ausgibt;
e) mit einer zweiten Schnittstelleneinrichtung (9), welche die Datenstruktur (DS) und die geänderten Werte (X5', X6') für die Optimierungsfreiheitsgrade (X5, X6) empfängt, die Werte der durch die Anzeigedaten (AD) markierten Optimierungsfreiheitsgrade (X5, X6) mit den geänderten Werten über schreibt, und welche die Datenstruktur (DS') mit den überschriebenen Optimierungsfreiheitsgraden (X5, X6) an die Berechnungseinrichtung (1) ausgibt.

**2.** Optimierungsvorrichtung (10) nach Anspruch 1,
**dadurch gekennzeichnet,**
**dass** die zweite Schnittstelleneinrichtung (9) die Anzeigedaten (AD) aus der Datenstruktur (DS) entfernt.

**3.** Optimierungsvorrichtung (10) nach Anspruch 1 oder 2,
**dadurch gekennzeichnet,**
**dass** die Eingabeeinrichtung (11), die erste Schnittstelleneinrichtung (7), die zweite Schnittstelleneinrichtung (9), die Berechnungseinrichtung (1) und/oder die Optimierungseinrichtung (8) als ausführbares Computerprogramm implementiert sind.

**4.** Optimierungsvorrichtung (10) nach wenigstens einem der Ansprüche 1 - 3,
**dadurch gekennzeichnet,**
**dass** die Optimierungseinrichtung (8) die Datenstruktur (DS) empfängt und unverändert ausgibt.

**5.** Optimierungsvorrichtung (10) nach wenigstens einem der Ansprüche 1 - 4,
**dadurch gekennzeichnet,**
**dass** die Datenstruktur (DS) ferner die Randparameter (RPO-RP3) umfasst.

**6.** Optimierungsvorrichtung (10) nach wenigstens einem der Ansprüche 1 - 5,
**dadurch gekennzeichnet,**
**dass** die Optimierungsvorrichtung (8) ein Verfahren nach wenigstens einem der Ansprüche 1 - 11 durchführt.

**7.** Verfahren zum Betreiben einer Optimierungsvorichtung nach einem der Ansprüche 1 - 6, mit den Verfahrensschritten:
a) Festlegen (S1) einer Auswahl von zu optimierenden Optimierungsfreiheitsgraden (XP, XQ) aus der Anzahl von Freiheitsgraden (X1-XN);
b) Festlegen (S2) von vorbestimmten Werten für die nicht zu optimierenden Freiheitsgrade;
c) Zusammenstellen (S3) einer Datenstruktur (DS) mit allen Freiheitsgraden (X1-XN) und mit Anzeigedaten (AD), wobei allen Freiheitsgraden (X1-XN) Werte zugewiesen sind und die Anzeigedaten (AD) die Optimierungsfreiheitsgrade (XP, XQ) in der Datenstruktur (DS) markieren;
d) Bestimmen (S4) eines Gütefunktionswertes mit der Gütefunktion (GF) in Abhängigkeit von den Randparametern (R1-RM) und den in der Datenstruktur (DS) vorliegenden Werten der Freiheitsgrade (X1-XN); und
e) Überschreiben (S6) der durch die Anzeigedaten (AD) markierten Werte der Optimierungsfreiheitsgrade (XP, XQ) in der Datenstruktur (DS) mit geänderten Werten (XP', XQ') und Bestimmen von Gütefunktionswerten bis ein vorgegebener Gütefunktionswert erzielt wird, wobei Optimierungswerte der Optimierungsfreiheitsgrade (XP, XQ) bestimmt werden.

**8.** Verfahren nach Anspruch 7,
**dadurch gekennzeichnet,**
**dass** ein Verfahrensschritt vorgesehen ist: Bestimmen der geänderten Werte für die Optimierungsfreiheitsgrade in Abhängigkeit von mindestens einem Gütefunktionswert.

**9.** Verfahren nach Anspruch 7 oder 8,
**dadurch gekennzeichnet,**
**dass** die Datenstruktur (DS) die Werte der Randparameter (R1-RM), der Freiheitsgrade (X1-XN) und die Anzeigedaten (AD), insbesondere als ein Datenvektor, aufweist.

**10.** Verfahren nach wenigstens einem der Ansprüche 7 - 9,
**dadurch gekennzeichnet,**
**dass** eine Messgrößenabschätzung (SW) für eine Messgröße die von einer Modellfunktion, welche von den Freiheitsgraden abhängt, geliefert wird, mit einem gemessenen Wert (MW) der Messgröße verglichen wird, und das Vergleichsergebnis (MF) als Gütefunktionswert ausgegeben wird, wobei die Modellfunktion in Abhängigkeit von den Randparametern (R1-RM) und den Freiheitsgraden (X1-XN) die Abschätzung (SW) der Messgröße liefert.

**11.** Verfahren nach wenigstens einem der Ansprüche 7 - 10,
**dadurch gekennzeichnet,**
**dass** die Werte der Optimierungsfreiheitsgrade (XP, XQ) derart geändert werden, dass der Gütefunktionswert ein Minimum aufweist.

**12.** Verfahren nach wenigstens einem der Ansprüche 7 - 11,
**dadurch gekennzeichnet,**
**dass** nach dem Überschreiben (S6) der durch die Anzeigedaten (AD) markierten Werte der Optimierungsfreiheitsgrade (XP, XQ) ein Verfahrensschritt vorgesehen ist: Entfernen der Anzeigedaten (AD) aus der Datenstruktur.

**13.** Verfahren nach wenigstens einem der Ansprüche 7 - 12,
**dadurch gekennzeichnet,**
**dass** der Schritt Zusammenstellen (S3) der Datenstruktur als erste Schnittstellenroutine eines Computerprogramms implementiert ist, welche als Eingangsvariablen alle Freiheitsgrade (X1-XN) und die Auswahl der zu optimierenden Optimierungsfreiheitsgrade (XP, XQ) empfängt, und welche die Datenstruktur (DS) und die Auswahl der zu optimierenden Optimierungsfreiheitsgrade (XP, XQ) ausgibt.

**14.** Verfahren nach wenigstens einem der Ansprüche 7 - 13,
**dadurch gekennzeichnet,**
**dass** die Gütefunktion (GF) als Berechnungsroutine eines Computerprogramms implementiert ist, welche als Eingangsvariable die Datenstruktur (DS) empfängt und welche den entsprechenden Gütefunktionswert ausgibt.

**15.** Verfahren nach wenigstens einem der Ansprüche 8 - 14,
**dadurch gekennzeichnet**,
das der Schritt Bestimmen der geänderten Werte für die Optimierungsfreiheitsgrade (XP, XQ) als eine Optimierungsroutine eines Computerprogramms implementiert ist, welche als Eingangsvariablen die Datenstruktur (DS), die Auswahl der zu optimierenden Optimierungsfreiheitsgrade (XP, XQ) und den Gütefunktionswert empfängt, und welche die Datenstruktur (DS) unverändert ausgibt und die geänderten Werte für die Optimierungsfreiheitsgrade (XP, XQ) ausgibt.

**16.** Verfahren nach wenigstens einem der Ansprüche 7 - 15,
**dadurch gekennzeichnet,**
**dass** der Schritt Überschreiben (S6) der durch die Anzeigedaten (AD) markierten Werte der Optimierungsfreiheitsgrade (XP, XQ) in der Datenstruktur (DS) mit geänderten Werten als zweite Schnittstellenroutine eines Computerprogramms implementiert ist, welche als Eingangsvariablen die Datenstruktur (DS) und die geänderten Werte für die Optimierungsfreiheitsgrade (XP, XQ) empfängt, und welche die entsprechende Datenstruktur (DS') mit den überschriebenen Werten der Optimierungsfreiheitsgrade (XP', XQ') ausgibt.

**17.** Computerprogrammprodukt, welches die Durchführung eines Verfahrens nach wenigstens einem der Ansprüche 7 - 16 veranlasst, wobei die Verfahrensschritte als Routinen implementiert sind.

**18.** Motorsteuerung mit einer programmierbaren Steuereinrichtung, welche derart ausgelegt ist, dass ein Verfahren nach einem der Ansprüche 7 - 16 zur Optimierung der Freiheitsgrade einer Modellfunktion für eine Motormessgröße durchgeführt wird, wobei insbesondere eine Optimierung für Freiheitsgrade einer Modellfunktion zur Abschätzung einer Kühlmitteltemperatur erfolgt.
